(19) Europäisches Patentamt
European Patent Office
Office européen des brevets

(11) **EP 1 720 165 B1**

(12) **EUROPEAN PATENT SPECIFICATION**

(45) Date of publication and mention
of the grant of the patent:
**06.10.2010 Bulletin 2010/40**

(51) Int Cl.:
*G11B 23/40* (2006.01)   *G11B 7/0037* (2006.01)
*G11B 23/42* (2006.01)   *G11B 7/085* (2006.01)

(21) Application number: **06005964.9**

(22) Date of filing: **23.03.2006**

(54) **Method for compensating for position error in an optical disc apparatus**

Verfahren für den Ausgleich eines Positionsfehlers bei einer optischen Plattenvorrichtung

Procédé de compensation d' erreur de position dans un appareil à disque optique

(84) Designated Contracting States:
**DE FR GB NL**

(30) Priority: **26.04.2005 KR 2005034343**

(43) Date of publication of application:
**08.11.2006 Bulletin 2006/45**

(73) Proprietor: **Hitachi-LG Data Storage Korea, Inc.
Seoul 150-010 (KR)**

(72) Inventor: **Bahng, Keuk Young
Osan-si
Kyunggi-Do 447-717 (KR)**

(74) Representative: **TER MEER - STEINMEISTER &
PARTNER GbR
Patentanwälte
Mauerkircherstrasse 45
81679 München (DE)**

(56) References cited:
**EP-A1- 1 515 318     EP-A2- 1 439 537
US-A1- 2005 058 044**

## Description

## BACKGROUND OF THE INVENTION

### 1. Field of the Invention

The invention r elates to a method for compensating for a position error in an optical disc apparatus, and, more particularly, to a method for compensating for a position error generated when a label is printed on a label surface of an optical disc by an optical disc apparatus.

### 2. Background of the Related Art

Optical discs have been developed recently which allow data to be recorded on a data surface of the disc, and a label with a desired design to be printed on the opposite, or non-data surface of the disc. The surface of the disc on which a label is printed is referred to as the label surface of the disc. Labels are typically transferred onto the label surface of the disc using a laser etching technology commonly referred to as LightScribe, in which a laser burns or etches an image onto a specially prepared, non-data side of an optical disc. A LightScribe disc is referred to h erein simply for ease of discussion. However, it is well understood by those of ordinary skill in the a rt that the invention m ay b e applied t o any such disc which includes a surface on which a label may be printed, and, more particularly, to any such disc which includes a data side and a non-data side which has been specially prepared for laser printing or etching.

A land/groove for performing a tracking servo operation during a data recording process is formed on the data surface of the optical disc, and Absolute Time In Pre-groove (ATIP) information for detecting a current position is recorded as a wobble land/groove. An optical disc recording apparatus receives a push-pull signal generated by the land/groove and performs a tracking servo operation using an established feedback scheme, recognizes a current position based on the ATIP information, and thus can perform a random access operation at a desired position.

However, such a wooble land/groove is formed only on the data surface of the disc, and not on the label surface of the disc. Thus, as the label surface lacks the ATIP information used to detect a current position, neither the tracking servo operation nor the random access operation can be performed on the label surface of the disc. Rather, labels must be sequentially printed on the label surface of the optical disc, starting at an inner area and progressing towards an outer area of the optical disc based on a feed-forward scheme. Thus, this type of disc is very sensitive to the dynamic characteristics of an actuator of the optical pickup unit associated with a tracking servo.

To address these problems, a saw-teeth zone is allocated to a Control Feature Outer Ring (CFOR) zone of this type of disc. The CFOR zone is provided on the label surface in the form of a circular band having a predetermined width of, for example, 650 $\mu$m Other widths may also be appropriate. The saw-teeth zone is divided into two zones opposite each other in the CFOR zone in consideration of eccentricity of the optical disc. A first area having a high reflection factor engages with a second area having a low reflection factor in the form of a plurality of saw-teeth. As a laser beam is directed at the center of the CFOR zone and the disc rotates, a resulting duty ratio of a reflected signal should be 50%. However, if a predetermined voltage is applied to an actuator arranged in the direction of a track which causes an objective lens to be positioned off center of the CFOR zone, as the disc rotates a laser beam directed at the CFOR zone is also off center, and the resulting duty ratio of the reflected signal would not necessarily be equal to 50%.

Therefore, an optical recording apparatus capable of performing a label-printing operation on a label surface of a disc may measure an actual sensitivity of the actuator as it moves the objective lens in a track direction based on the magnitude of a predetermined voltage to be applied to the actuator in order to shift an objective lens to the outer area of the disc by a predetermined distance, and then perform a tracking servo operation using a feed-forward scheme based on the measured actual sensitivity of the track-direction actuator. However, other critical components associated with this tracking servo operation which affect recording quality of the optical disc include the dynamic characteristics of a sled motor which moves the optical pickup unit in a radial direction of the disc. The sled motor includes a step motor and a device for converting a rotation of the step motor into rectilinear motion. This conversion often results in unexpected step errors generated by mechanical factors (such as, for example, angle errors in frame/yoke values, non-uniform assembly at an inner diameter of the frame/ yoke values, and the like) a nd electrical factors (such a s, for example, winding resistance, non-uniformity between inductance phases, and unbalanced magnetic flux formed on the surface of each tooth, and the like).

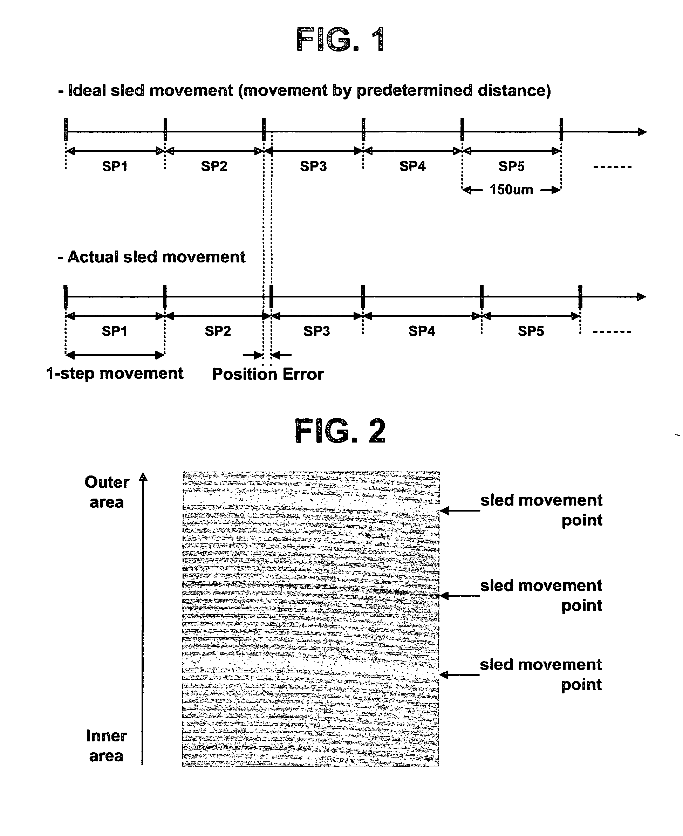

FIG. 1 shows an ideal sled movement distance and actual sled movement distance for each step of an exemplary step motor. Due to the above-mentioned factors, an unexpected position error may occur during the sled movement as shown in FIG. 1. The tracking error resulting from this position error is shown in FIG 2. Therefore, although the optical recording apparatus capable of performing a label-printing operation may be able to compensate for dynamic characteristics of an actuator based on operation of the saw-teeth zone, it cannot compensate for any position error generated by the sled motor as the optical pickup unit moves from the inner portion towards an outer circumference of the disc. This position error may result in space on the label surface on which a portion of a label is not printed may, or a portion of a label may be printed twice, each resulting in deterioration of quality.

EP 1 515 318 A1 describes a method of calibrating a fine actuator using a reference pattern on a trackless optical disc surface. Herein, a fine actuator is calibrated using a sawtooth-pattern in a disc media marking system. Herein, a focusing lens is moved to a known radius of an optical disc, enabling the scanning of a reference pattern on the disc. Thereafter, an updated DAC count is written to a DAC and a power amplifier is driven with the DAC output voltage. Then, a fine actuator is driven with a current supplied by the power amplifier based on the DAC output voltage and a reference pattern is scanned. Then, a reflectivity signal from the scanning is generated and a radius from the duty cycle of the reflectivity signal is calculated. Thereafter, the radius and the DAC count is recorded in a table. The table is checked to see if it is full. If the table is not full, the calibration process is performed again. If the table is full, the radii and the DAC counts are configured as coordinate data and a line fitting algorithm on coordinate date to generate a best line fit is performed. Thereafter, the gain of the fine actuator based on slope of the best fit line is calibrated.

US 2005/0058044 A1 describes an optical disk modified for speed and orientation tracking. Herein, an optical disk includes a label region having writable material. Disk speed features are located in a manner which allows them to be readable when writing to the label region. These features could include disk angular orientation features providing information on the angular orientation of the optical disk during rotation. The angular orientation of the disk is important as an image is applied to the label region, since information about the angular orientation of the disk implies information about the angular orientation of the label region during the image application process.

EP 1 439 537 A2 describes an optical disk labeling system. Herein, the disk labeling system includes a label design application to produce label data, a calibration module to associate a signal to deflect a laser with a response from a sensor trakking laser light reflected of calibration indicia, and to calculate calibration data comprising a deflection input required to deflect the laser by an amount of a radial height of a pixel to be marked on a label region of a disk. The disk labeling system further comprises a label burn application to consume the label data and to associate pixels contained within the label data with the calibration data from the calibration module.

## SUMMARY OF THE INVENTION

An object of the invention is to solve at least the above problems and/or disadvantages and to provide at least the advantages described hereinafter.

This object is solved by the method of printing a label on a recordable medium of claim 1. Further advantages, refinements and embodiments of the invention are described in the respective sub-claims.

Herein, a method for compensating for a position error in an optical disc drive may include the step of compensating for a position error caused by a movement of an optical pickup unit, on the basis of error data, stored in the optical disc drive, for each step of a motor moving the optical pickup unit, when printing a label on a LightScribe disc.

Preferably, the error data for each step is stored in association with one rotation of the motor; and compensation of the position error is established by compensating for a track-direction movement of an actuator.

Advantageously, a method of printing a LightScribe disc may include comprising determining whether a recordable medium is a LightScribe disc based on a first pattern corresponding to spokes provided near an inner circumference of the recordable medium using a spoke detector; determining whether a surface facing an optical pickup device corresponds to a data surface or a label surface based on whether reflection of optical light occurs on the surface or within the LightScribe disc; detecting a second pattern corresponding to an index mark; synchronizing with a spoke corresponding to position "0", the spokes providing location information of index mark, saw teeth area, media ID area, and controlling a speed of rotation of the LightScribe disc; detecting media ID on the LightScribe disc; and printing on the label surface of the LightScribe disc, comprising compensating for a position error for each step/sled movement of a prescribed distance of an optical pickup device, wherein a 360 degree rotation corresponds to 20 step/sled movements of the optical pickup device such that each step/sled movement corresponds to an 18 degree rotation of a step motor and the prescribed distance corresponds to 150 $\mu$m of the step motor, wherein any position error for each step movement deviating from 150 $\mu$m is previously stored in a memory for compensating for any position error during the print step.

## BRIEF DESCRIPTION OF THE DRAWINGS

The invention will be described in detail with reference to the following drawings in which like reference numerals refer to like elements wherein:

FIG. 1 provides a comparison between ideal and actual sled movement distances for sequential steps of an exemplary step motor;
FIG. 2 provides an example of tracking error generated by a position error;
FIG. 3 is a schematic view of an exemplary optical disc drive (ODD) in which a position error compensation method in accordance with an embodiment of the invention may be implemented;
FIG. 4 is a top view of a label surface of an optical disc as shown in FIG. 3;
FIG. 5 illustrates a control feature zone and an index mark pattern of an optical disc as shown in FIGS. 3-4;
FIG. 6 illustrates a control feature outer ring (CFOR) zone of the control feature zone shown in FIG. 5;
FIG. 7 is a flow chart of a method for compensating for a position error in an optical disc drive, in accordance with an embodiment of the invention;
FIG. 8 is a schematic illustration of an exemplary actuator used with an optical pickup unit as shown in FIG. 3;
FIG. 9 is a flow chart of a method for detecting a position error in an optical disc drive, in accordance with an embodiment of the invention;
FIG. 10 illustrates an exemplary step motor which may be associated with the methods shown in FIGS. 7-8;
FIG. 11 is a graph illustrating errors associated with individual steps of a step motor such as the exemplary step motor shown in FIG. 1, in accordance with an embodiment of the invention;
FIG. 12 is a graph illustrating error compensation values of individual steps of a step motor such as the exemplary step motor shown in FIG 10, in accordance with an embodiment of the ; and
FIG. 13 provides an example of a normal tracking operation generated by position error compensation, in accordance with an embodiment of the invention.

## DETAILED DESCRIPTION OF PREFERRED EMBODIMENTS

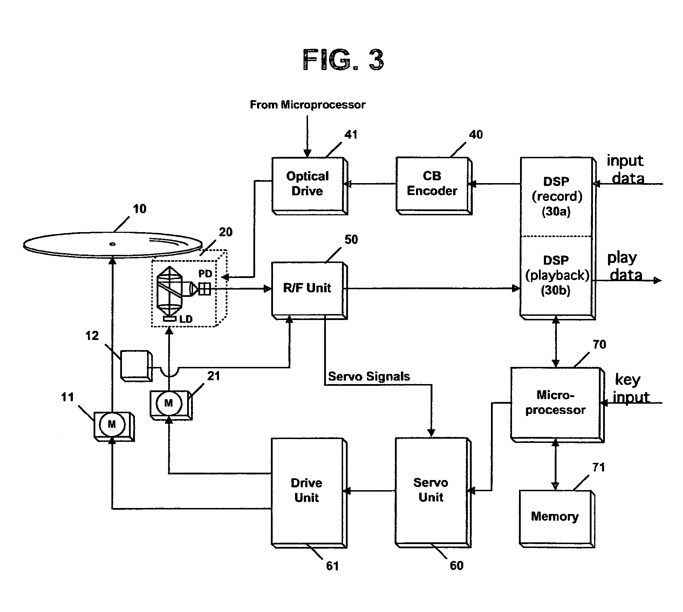

FIG. 3 is a block diagram illustrating an optical disc drive (ODD) in which a position error compensation method in accordance with embodiments of the invention may be implemented. The ODD includes a digital record signal processor (DSP) 30a for adding an error correction code (ECC), to input digital data, and converting the resultant digital data into record-format data, a channel-bit encoder 40 for reconverting the record-format data into a bit stream, and an optical drive 41 for generating a light-amount drive signal according to an input signal. An optical pickup unit 20 records data on an optical disc 10 based on the light-amount drive signal, and reads data from a recording surface of the optical disc 10, and a Radio Frequency (RF) unit 50 performs a filter-shaping operation on a signal output by the optical pickup unit 20 and generates a corresponding binary signal. A drive unit 61 including a spindle motor 11 rotates the optical disc 10, and a sled motor 21 moves the optical pickup unit 20. A servo unit 60 receives a servo signal and a rotation speed of the optical disc 10 from the RF unit 50, and controls operations of the drive unit 61 using the received servo signal and rotation speed. A digital playback signal processor 30b restores the binary signal to original data using a self-clock signal, a phase of which is synchronized with the binary signal. Position error values for each step associated with one rotation of the step motor after being detected in a manufacturing process of the optical disc drive 10 are stored in a memory 71, and a microprocessor 70 compensates for a position error for each step of the step motor based on the stored position error values. The optical disc drive may also include a spoke detector 12 for detecting a spoke pattern provided in a speed control feature zone of the disc 10 so as to determine if a seated disc has both a data surface and a label surface, such as, for example, the LightScribe disc discussed above, based on a signal output by the spoke detector 12, and controls a rotation speed of the disc.

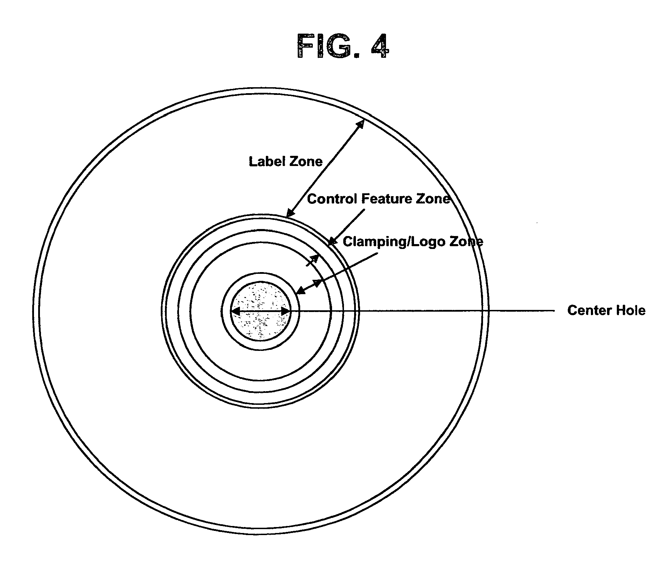

A disc which includes both a data surface and a label surface, such as, for example, the LightScribe disc discussed above, can record data on a data surface thereof, and can also print a a desired image, or label, on a label surface thereof. The layout of the label surface of such a disc is shown in FIG. 4.

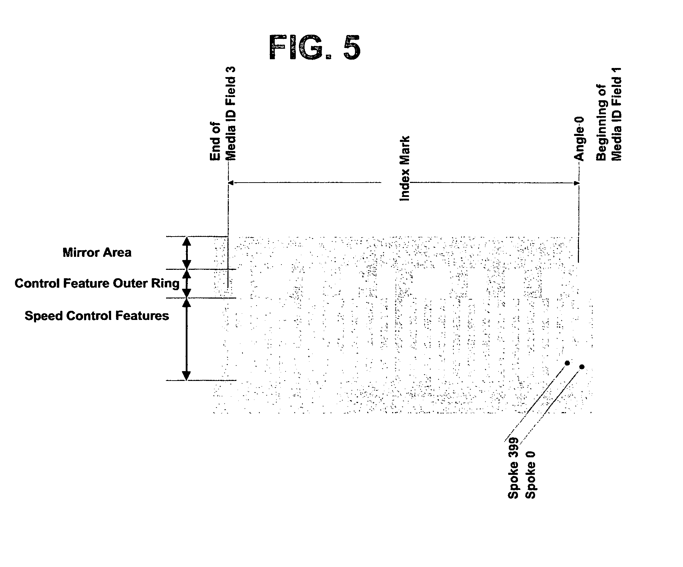

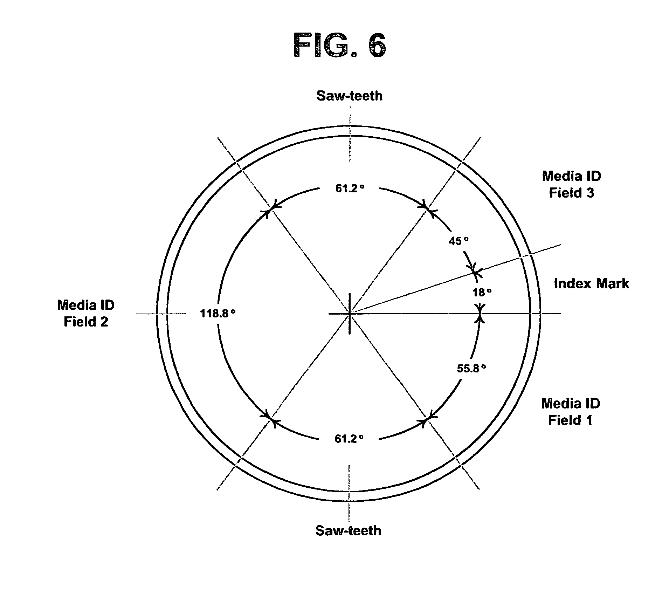

FIG. 5 shows a detailed configuration of the control feature zone of the disc shown in FIG. 4, including an index mark pattern thereof. The control feature zone includes a speed control feature zone, a Control Feature Outer Ring (CFOR) zone, and a mirror zone. The index mark recorded in the CFOR zone allows the CFOR zone to be easily found, and allows for synchronization with the first spoke (Spoke 0) of a spoke pattern portion of the speed control features. More specifically, the first spoke (Spoke 0) delineates an end position of the index mark, and this beginning point is used as a reference position in a circumferential direction of the disc. FIG. 6 shows a detailed configuration of the CFOR zone contained in the control feature zone shown in FIG. 5. The CFOR zone includes the index mark zone, a saw-teeth zone, and first, second, and third media ID Fields (Media ID fields 1, 2, and 3, respectively).

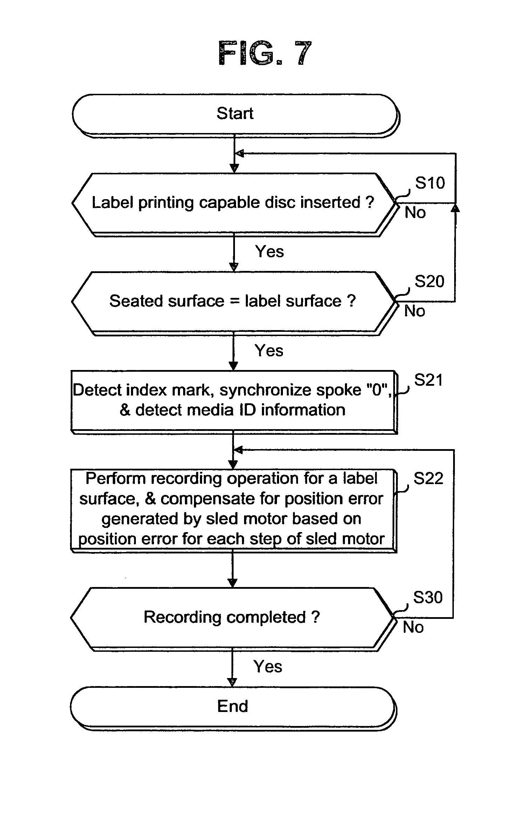

FIG. 7 is a flow chart of a method for compensating for a position error in an ODD, in accordance with an embodiment of the invention. The method for compensating for the position error in the ODD will hereinafter be described with reference to FIGS. 3 and 7.

A disc is seated in the ODD, and the microprocessor 70 determines whether the seated disc has at least a label surface, and preferably, both a data surface and a label surface, such as, for example, the LightScribe disc as discussed above, based on a signal output by the spoke detector 12 at step S10. If the microprocessor 70 determines that the seated disc 10 includes a label surface at step S10, the microprocessor 70 moves the optical pickup unit 20 to a label zone of the disc 10, searches for a peak point of an RF sum value, and determines whether a seated surface of the optical disc 10 facing the optical pickup unit 20 is a label surface at step S20. If the seated surface of the optical disc 10 is determined to be the label surface at step S20, the microprocessor 70 moves the optical pickup unit 20 to the control feature zone of the optical disc 10, detects an index mark from an index mark pattern in the CFOR zone, synchronizes with the first spoke (Spoke 0) based on the detected index mark, and detects media ID information of the CFOR zone from the first spoke (Spoke 0) at step S21.

The microprocessor 70 recognizes a start position of the saw-teeth zone based on detection of the spoke, receives a signal from the saw-teeth zone as the disc 10 rotates, moves an objective lens of the optical pickup unit 20 to a center radial position of the saw-teeth zone based on the detected signal, and measures an actual sensitivity of a track-direction actuator at step S22.

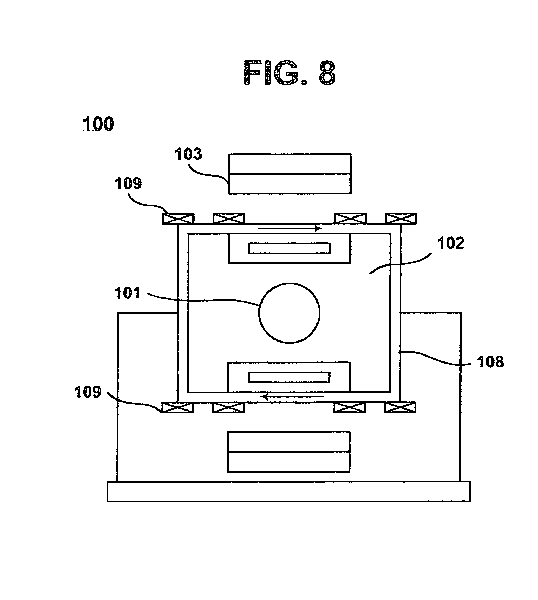

Figure 8 illustrates an exemplary actuator 100 for the optical pickup unit 20, in which an objective lens 101 is centrally attached to a lens holder 102, a focusing coil 108 is wound around the lens holder 102, and a tracking coil 109 is attached to an upper surface of the focusing coil 108, with the focusing and tracking coils 108 and 109 facing a set of magnets 103. Electromagnetic forces generated by the magnets 103 in response to driving voltages cause the focusing coil 108 to provide for upward and downward, or vertical, movement of the objective lens 101 within the lens holder 102, and cause the tracking coil 109 to provide for tracking, or horizontal, movement of the objective lens 101 within the lens holder 102.

Thus, more specifically, in step S22, the microprocessor 70 applies a predetermined voltage to the actuator 100 if the objective lens 101 of the optical pickup unit 20 is positioned at the center radial position of the saw-teeth zone, such that it moves the objective lens 101 to the inner or outer area of the disc 10 by a predetermined distance corresponding to the predetermined voltage. This predetermined distance may be, for example, a distance of 30 $\mu$m; however, other distances may also be appropriate. Thereafter, the microprocessor 70 calculates an actual movement distance of the objective lens 101 based on a duty ratio of the signal detected from the saw-teeth zone, and from this duty ratio is able to calculate a voltage necessary to move the objective lens 101 to the inner or outer area of the disc 10 by a predetermined distance. By repeating these operations, the microprocessor 70 can correctly compensate for a driving operation of the actuator 100.

The microprocessor 70 moves the optical pickup unit 20 to the label zone of the optical disc 10, and performs a requested operation such as, for example, a label-printing operation, in the label zone. The microprocessor 70 receives a position error for each step of the sled motor 21 from the memory 71, and performs a feed-forward tracking servo operation based on the received position error, compensating for the position error generated by the sled motor 21 at step S22.

This feed-forward tracking servo operation will now be described.

The microprocessor 70 moves the optical pickup unit 20 toward the outer area of the disc at intervals of a predetermined distance using the sled motor 21, such that labels can be sequentially printed in the label zone as the optical pickup unit 20 moves from the inner area toward the outer area of the label zone of the optical disc 10. If instead, the optical pickup unit 20 is fixed, the microprocessor 70 slowly moves the actuator 100 capable of supporting the objective lens 101 toward the outer area. The more biased the objective lens 101 is to the inner or outer area from the center position of the optical pickup unit 20, the lower the optical electrical performance of the optical pickup unit 20 is likely to be. Therefore, if the objective lens 101 is off center with respect to the optical pickup unit 20 and biased toward the outer area of the optical pickup unit 20 by a predetermined distance, the microprocessor 70 operates the sled motor 21 such that it moves the optical pickup unit 20 toward the outer area. In this case, an objective lens 101 positioned at an outer area of the optical pickup unit 20 must be shifted to a center position or inner area of the optical pickup unit 20 during the movement of the optical pickup unit 20.

For example, if optical performance is greatly deteriorated because the objective lens 101 is biased toward the inner or outer area of the disc 10 by a first predetermined distance of for example, 100$\mu$m from the center part of the optical pickup unit 20, the optical pickup unit 20 must be shifted to another place when the objective lens 101 is biased toward the inner or outer area by a second predetermined distance of, for example, 75 $\mu$m, which is shorter than the first predetermined distance of 100 $\mu$m. In this case, the minimum unit of movement by which the sled motor 21 may move the optical pickup unit 20 may be determined to be 150 $\mu$m, or two times the second predetermined distance of 75 $\mu$m In other words, if the objective lens 101 is biased toward the outer area by 75 $\mu$m, the sled motor moves 21 the optical pickup unit 20 toward the outer area by 150 $\mu$m. Simultaneously, provided that the optical pickup unit 20 moves by the predetermined distance of 150 $\mu$m during one rotation of the disc 10, the microprocessor 70 shifts the actuator to the inner area based on a current position of the objective lens of the optical pickup unit 20 by a predetermined distance of "150 $\mu$m - track pitch" (i.e., a predetermined distance of "75 $\mu$m - track pitch" on the basis of the center position of the optical pickup unit).

In more detail, if the actuator 100 is biased toward the outer area by a predetermined distance, the optical pickup unit 20 must move to the outer area by a predetermined minimum unit, and at the sa me time the actuator 100 must move toward the inner area. In this case, a speed and a movement distance of the actuator 100 moving to the inner area are determined based on a time consumed for moving the optical pickup unit 20 by the minimum unit, a distance of the minimum unit, a time consumed for one rotation of the optical disc 10 at a current position, and a track pitch.

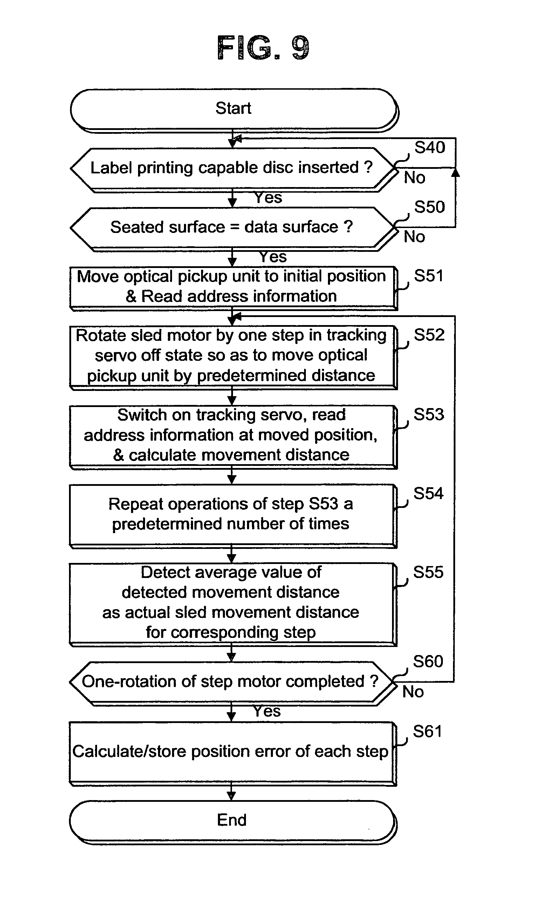

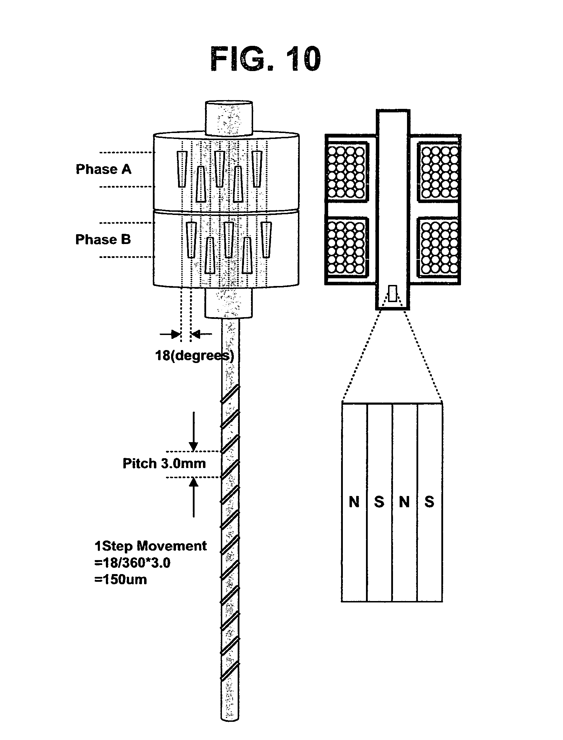

A method for detecting/storing a position error for each step of the step motor will be described with reference to FIG. 9. It is noted that the sled motor 21 includes a step motor which may be in the form of a craw-pole-shaped step motor as shown in FIG. 10. The step motor shown in FIG. 10 uses a two-phase excitation scheme, and rotatably moves by a desired step according to combination of polarities of individual phase voltages. For example, one step may be equal to approximately 1/20 of a rotation, or a rotation of approximately 18°. If a lead screw having a pitch of, for example, 3mm is provided, then one step corresponds to a rectilinear movement of approximately 150 $\mu$m. Therefore, this step motor ideally moves by a predetermined distance of approximately 150 $\mu$m, or approximately 90 tracks, for each step (each step =IKick).

However, as discussed above, the rectilinear movement is affected by a variety of mechanical and electrical factors. Therefore, the microprocessor 70 stores the above-mentioned ideal sled movement distance of 150 $\mu$m as a reference sled movement distance. Then, an actual sled movement distance for each step during one rotation of the step motor is detected during manufacturing of the optical disc drive. In this case, if one step of the step motor is 1/20 of a rotation, or a rotation of 18°, the sled movement distance corresponds to a total of 20 steps during one rotation of the step motor. The microprocessor 70 detects actual sled movement distances associated with these 20 steps (i.e., individual steps from a first step (SP1) to a last step (SP20)) and compares them to corresponding ideal sled movement distances, as described below with respect to FIG. 9.

If the microprocessor 70 determines that the optical disc 10 is seated at step S40, the microprocessor 70 determines whether the seated surface of the optical disc 10 is a data surface at step S50. This is done to obtain a block address of the data surface of the optical disc 10 which is required to detect a sled movement distance for each step. If the data surface of the optical disc 10 is seated, the microprocessor 70 shifts the optical pickup unit 20 to a predetermined initial position contained in the optical disc 10 such as, for example, a block address of 0, using the servo unit 60 and the drive 61, and reads address information at the shifted position at step S 51. Thereafter, the microprocessor 70 detects an actual movement distance whenever the step motor performs one-step rotation at step S52.

More specifically, the microprocessor 70 applies a predetermined drive voltage to the step motor via the servo unit 60 and the drive unit 61, such that it rotates the step motor by one step (i.e., 1/20 rotation). The optical pickup unit 20 moves a predetermined distance corresponding to this one step based on the initial position at step S52. During the movement of the optical pickup unit 20, the tracking servo remains in an off-state.

If this one-step movement is completed, the microprocessor 70 switches on the tracking servo to read address information at the shifted position contained in the optical disc 10, and detects a sled movement distance associated with the first step SP1 on the basis of two addresses having been read for this one-step movement (i.e., first address information detected prior to the one-step movement and second address information detected after the one-step movement) at step S53. In this case, the detected movement distance is indicative of a number of tracks. When detecting the above-mentioned movement distance in units of a predetermined distance given in $\mu$m, instead of track number, the following Equation 1 may be employed:

[Equation 1]

$$R^2 = R_0^2 + \frac{pv}{\pi} BlockAddress$$

where p = track pitch, $v$= disc linear velocity, and $R_0$=Block Address where the value is 0.

The microprocessor 70 switches o ff the tracking se rvo at the shifted position, then switches on the tracking servo, reads address information, and detects the movement distance. The above-mentioned operations of the microprocessor 70 are repeated a predetermined number of times such as, for example, three times, at step S54 and an average value of the detected sled movement distance is calculated to determine an actual sled movement distance for the step SP1 at step S55. By repeatedly reading the address information at the shifted position, an actual sled movement distance may be determined which takes into consideration any eccentricity components of the optical disc 10.

After detecting the actual sled movement for the step SP1, the microprocessor 70 detects the actual sled movement distance for the next step SP2. F or this operation, the microprocessor 70 switches off the tracking servo, and transmits a predetermined drive voltage to the step motor via the servo unit 60 and the drive 61, such that the step motor rotates by one step and, the optical pickup unit 20 moves a predetermined distance corresponding to this one-step. If the one-step movement is completed, the microprocessor 70 reads address information at the shifted position by switching on the tracking servo, and detects a sled movement distance from an initial position prior to initiating this one-step movement to a current position associated with the step SP2. In this case, the microprocessor 70 reads address information at the shifted current position a predetermined number of times and determines an average value of individual detected movement distances to be an actual sled movement distance associated with the step SP2. These operations are repeated, and the microprocessor 70 detects the actual sled movement distance associated with the remaining steps SP3 - SP20 at step S60.

If all the actual sled movement distances associated with individual steps SP1~SP20 are detected at step S60, the microprocessor 70 calculates a sled movement error, or a position error, associated with each of the steps SP1-SP20 based on a difference or deviation between the reference sled movement distance of 150 $\mu$m (90 tracks) for one step and the detected actual sled movement distance, and stores the calculated sled movement error for each step in the memory 71 at step S61.

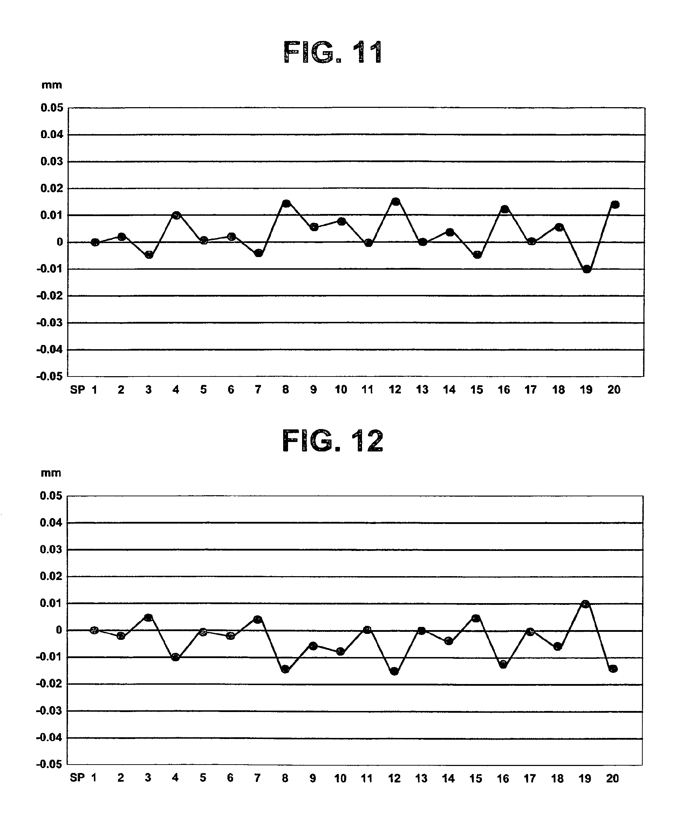

FIG. 11 is a graph illustrating sled movement errors associated with the individual steps SP1-SP20 of the step motor collected as described above.

If a recording operation such as, for example, a label-printing operation for the label surface is performed by an ODD in which a position error value for each step of the step motor was detected and stored in the memory 71 during manufacture of the ODD, the microprocessor 70 may compensate for a position error caused by the step motor based on the position error values stored in the memory 71 at step S23.

As shown in FIG. 11, a position error value for a fourth step SP4 of the sled motor (i.e., step motor) is set to 0.01mm (10 $\mu$m). This means that the optical pickup unit 20 is shifted beyond the reference sled movement distance of 150 $\mu$m by 10 $\mu$m, to 160 $\mu$m, during the fourth step SP4. Therefore, when the track-direction actuator moves toward the inner area during the fourth step SP4 of the sled motor, the optical pickup unit 20 is moved toward the outer area by 160 $\mu$m, and the microprocessor 70 shifts the track-direction actuator toward the inner area by an additional distance of 10 $\mu$m equal to the position error value for the fourth step SP4, such that the microprocessor 70 compensates for the position error caused by the sled motor. The microprocessor 70 can more correctly move the actuator to the inner area using the actual sensitivity of the track-direction actuator calculated at step S22. The compensation operation of the microprocessor 70 described above is repeatedly performed until the recording operation is completed at step S30,

Thus, the microprocessor 70 may store the position error compensation value for each step in the memory 71. For example, if the actual sled movement distance of the step SP1 is 150 $\mu$m, the microprocessor 70 determines a position error for the step SP1 to be zero, and thus a position error compensation value for the step SP1 of zero is stored in memory 71. If the actual sled movement distance of the fourth step SP4 is 160 $\mu$m, the microprocessor 70 determines a position error for the fourth step SP4 to be 10 $\mu$m, and stores the position error compensation value of - 10$\mu$m for the step SP4 in the memory 71. If the actual sled movement distance of a step SP19 is 140 $\mu$m, the microprocessor 70 determines a position error for the step SP19 to be -10 $\mu$m, and stores a position error compensation value of 10 $\mu$m for step SP19 in memory 71.

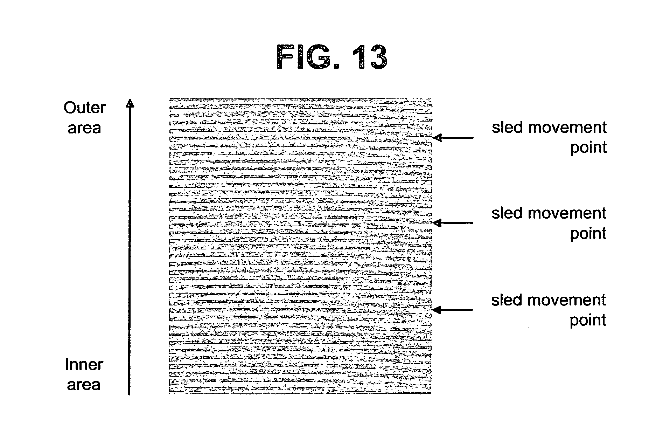

FIG. 12 is a graph illustrating error compensation values of individual steps of the step motor according to the present invention. During the recording operation such as, for example, a label-printing operation on the label surface of the disc, the microprocessor 70 compensates for the position error of the step motor based on the position error compensation values stored in the memory 71. Application of these error compensation values using the method shown in FIG. 7 produces a normal tracking result, as shown in FIG. 13.

As described above, the position error compensation method for use in an optical disc drive apparatus in accordance with embodiments of the invention, properly compensates for a position error associated with each step of the step motor, and acquires a normal tracking result without generating a tracking error, such that a recording operation on the label surface of an optical disc may be stably performed.

Additionally, the position error compensation method for use in an optical disc drive in accordance with embodiments of the invention can stably perform a recording operation on a label surface of a disc without generating a position error, thus improving the quality of the label-printing operation.

## Claims

1. A method of printing a label on recordable medium (10) including a data surface configured to receive and store data on a first side thereof, and a label surface configured to receive a label printed thereon on a second side opposite the first side, the method comprising:

   - reading a first pattern from the recordable medium (10) to determine if the recordable medium (10) includes both a data surface on a first side thereof and a label surface on a second side opposite the first side thereof, wherein the first pattern is read by a spoke detector (12) and comprises a plurality of spokes provided proximate an inner circumference of a recordable medium (10);
   - determining if a surface of the recordable medium (10) facing an optical pickup device (20) corresponds to the data surface or the label surface of the recordable medium (10) based on a reflection of optical light from the surface of the recordable medium (10) facing the optical pickup (20);
   - synchronizing operation of the optical pickup device (20) with a reference position delineated by the first pattern if it is determined that the surface of the recordable medium (10) facing the optical pickup device (20) is the label surface;
   - accessing a plurality of predetermined position error compensation values corresponding to a plurality of predetermined step movements within a rotation of a step motor (21) which moves the optical pickup device (20); and
   - applying the plurality of predetermined position error compensation values to compensate for a position error as the step motor (21) rotates and moves the optical pickup device (20) while performing a label printing operation to print an image on the label surface of the recordable medium (10).

2. The method of claim 1, wherein determining if a surface of the recordable medium (10) facing an optical pickup device (20) corresponds to the data surface or the label surface comprises:

- determining that the surface facing the optical pickup (20) is the data surface if optical light is reflected from the surface facing the optical pickup (20); and
- determining that the surface facing the optical pickup (20) is a label surface if light is not reflected from the surface facing the optical pickup (20).

**3.** The method of claim 1, wherein synchronizing operation of the optical pickup device (20) with a reference position delineated by the first pattern compromises synchronizing operation of the optical pickup device (20) with a spoke (spoke 0) of the plurality of spokes which corresponds to a zero position on the inner circumference of the recordable medium.

**4.** The method of claim 1, wherein synchronizing operation of the optical pickup device (20) with a reference position delineated by the first pattern comprises controlling a speed of rotation of the recordable medium (10).

**5.** The method of claim 1, wherein the reference position delineated by the first pattern also provides location information related to at least one of a plurality of index marks, a saw teeth area, and a media identification area.

**6.** The method of claim 1, wherein the predetermined steps within a rotation of the step motor (21) comprise 20 step movements of the optical pickup device (20) within a 360 degree rotation of the step motor (21) such that each step movement corresponds to an 18 degree rotation of the step motor (21).

**7.** The method of claim 6, wherein each of the plurality of predetermined step movements has a prescribed distance of approximately 150 $\mu$m.

**8.** The method of claim 7, wherein the prescribed distance of approximately 150 $\mu$m is based on a 3 $\mu$m pitch of a threaded portion of the step motor (21).

**9.** The method of claim 1, further comprising compensating for a driving operation of an actuator (100) which moves a lens (101) of the optical pickup device (20).

**10.** The method of claim 9, wherein compensating for a driving operation of the actuator (100) comprises measuring a sensitivity of the actuator (100), comprising:

- positioning the lens (101) of the optical pickup device (20) at a center radial position of a saw teeth area of the first pattern and applying a predetermined voltage to the actuator (100) to move the lens (101) a predetermined distance;
- calculating an actual movement distance of the lens (101) based on a duty ratio of a signal detected from the saw teeth area; and
- calculating an actual voltage required to move the lens (101) the predetermined distance.

**11.** The method of claim 1, wherein applying the plurality of predetermined position error compensation values to compensate for a position error comprises adjusting each step movement of the step motor (21) by a value substantially equal to its corresponding position error compensation value.

**12.** The method of claim 1, wherein accessing a plurality of predetermined position error compensation values further comprises previously storing a plurality of position error compensation values in a memory portion (71) of an optical disc device during manufacture of the optical disc device.

**13.** The method of claim 12, wherein previously storing a plurality of position error compensation values in a memory portion (71) of an optical disc device during manufacture of the optical disc device comprises:

- positioning a data surface of the recording medium (10) facing an optical pickup device (20);
- shifting the optical pickup device (20) to an initial predetermined position and reading initial address information from the data surface corresponding to the initial position;
- moving the optical pickup device (20) a predetermined distance from the initial position to a new position based on a predetermined drive voltage;
- reading address information from the data surface corresponding to the new position and determining an actual distance moved based on the address information; and
- comparing the predetermined distance moved to the actual distance moved, and determining a corresponding position error value.

**14.** The method of claim 13, wherein reading address information from the data surface corresponding to the new position and determining an actual distance moved based on the address information comprises:

- reading address information from the data surface corresponding to the new position a plurality of times;
- determining an actual distance moved each time the address information is read; and
- averaging the determined actual distances moved to determine an average actual distance moved.

**15.** The method of claim 13, further comprising repeating moving, reading, and comparing steps a predetermined number of times, tabulating the resulting position error values, and storing the resulting position error values as a plurality of position error compensation values in a memory portion (71) of the optical disc device.

**16.** The method of claim 1, wherein the recordable medium (10) is a LightScribe disc.


**Patentansprüche**

**1.** Verfahren zum Drucken eines Etiketts auf ein aufzeichnungsfähiges Medium (10), das auf einer ersten seiner Seiten eine Datenoberfläche enthält, die konfiguriert ist, um Daten aufzunehmen und zu speichern, und auf einer zweiten Seite gegenüber der ersten Seite eine Etikettoberfläche enthält, die konfiguriert ist, um ein darauf gedrucktes Etikett aufzunehmen, wobei das Verfahren umfasst:

- Lesen eines ersten Musters von dem aufzeichnungsfähigen Medium (10), um zu bestimmen, ob das aufzeichnungsfähige Medium (10) auf einer ersten seiner Seiten eine Datenoberfläche und auf einer zweiten seiner Seiten gegenüber seiner ersten Seite eine Etikettoberfläche enthält, wobei das erste Muster durch einen Speichendetektor (12) gelesen wird und mehrere Speichen aufweist, die in der Nähe eines inneren Umfangs eines aufzeichnungsfähigen Mediums (10) vorgesehen sind;
- Bestimmen, ob eine Oberfläche des aufzeichnungsfähigen Mediums (10), die einer optischen Aufnehmervorrichtung (20) zugewandt ist, der Datenoberfläche oder der Etikettoberfläche des aufzeichnungsfähigen Mediums (10) entspricht, anhand einer Reflexion von optischem Licht von der Oberfläche des aufzeichnungsfähigen Mediums (10), die dem optischen Aufnehmer (20) zugewandt ist;
- Synchronisieren der Operation der optischen Aufnehmervorrichtung (20) mit einer Referenzposition, die durch das erste Muster angegeben ist, falls festgestellt wird, dass die Oberfläche des aufzeichnungsfähigen Mediums (10), die der optischen Aufnehmervorrichtung (20) zugewandt ist, die Etikettoberfläche ist;
- Zugreifen auf mehrere vorgegebene Positionsfehler-Kompensationswerte, die mehreren vorgegebenen Schrittbewegungen ohne Drehung eines Schrittmotors (21), der die optische Aufnehmervorrichtung (20) bewegt, entsprechen, und

- Anwenden der mehreren vorgegebenen Positionsfehler-Kompensationswerte auf die Kompensation eines Positionsfehlers, wenn sich der Schrittmotor (21) dreht und die optische Aufnehmervorrichtung (20) bewegt, während eine Etikettdruckoperation ausgeführt wird, um ein Bild auf die Etikettoberfläche des aufzeichnungsfähigen Mediums (10) zu drukken.

**2.** Verfahren nach Anspruch 1, wobei das Bestimmen, ob eine Oberfläche des aufzeichnungsfähigen Mediums (10), die der optischen Aufnehmervorrichtung (20) zugewandt ist, der Datenoberfläche oder der Etikettoberfläche entspricht, umfasst:

- Bestimmen, dass die dem optischen Aufnehmer (20) zugewandte Oberfläche die Datenoberfläche ist, falls das optische Licht von der dem optischen Aufnehmer (20) zugewandten Oberfläche reflektiert wird; und
- Bestimmen, dass die dem optischen Aufnehmer (20) zugewandte Oberfläche eine Etikettoberfläche ist, falls Licht nicht von der dem optischen Aufnehmer (20) zugewandten Oberfläche reflektiert wird.

**3.** Verfahren nach Anspruch 1, wobei die Synchronisieren der Operation der optischen Aufnehmervorrichtung (20) mit einer durch das erste Muster angegebenen Referenzposition eine Synchronisieren der Operation der optischen Aufnehmervorrichtung (20) mit einer Speiche (Speiche 0) der mehreren Speichen, die einer Nullposition am inneren Umfang des aufzeichnungsfähigen Mediums entspricht, umfasst.

**4.** Verfahren nach Anspruch 1, wobei die Synchronisieren der Operation der optischen Aufnehmervorrichtung (20) mit einer durch das erste Muster angegebenen Referenzposition das Steuern einer Drehzahl des aufzeichnungsfähigen Mediums (10) umfasst.

**5.** Verfahren nach Anspruch 1, wobei die durch das erste Muster angegebene Referenzposition außerdem Ortsinformationen bereitstellt, die mit wenigstens einer von mehreren Indexmarkierungen und/oder einem Sägezahnbereich und/oder einem Medienidentifizierungsbereich in Beziehung stehen.

**6.** Verfahren nach Anspruch 1, wobei die vorgegebenen Schritte innerhalb einer Drehung des Schrittmotors (21) 20 Schrittbewegungen der optischen Aufnehmervorrichtung (20) innerhalb einer Drehung um 360 Grad des Schrittmotors (21) umfassen, derart, dass jede Schrittbewegung einer Drehung um 18 Grad des Schrittmotors (21) entspricht.

**7.** Verfahren nach Anspruch 6, wobei jede der mehreren vorgegebenen Schrittbewegungen eine vorgegebene Strecke von etwa 150 $\mu$m hat.

**8.** Verfahren nach Anspruch 7, wobei die vorgeschriebene Strecke von etwa 150 $\mu$m auf einer Steighöhe von 3 $\mu$m eines Gewindeabschnitts des Schrittmotors (21) beruht.

**9.** Verfahren nach Anspruch 1, das ferner das Kompensieren einer Antriebsoperation eines Aktors (100), der eine Linse (101) der optischen Aufnehmervorrichtung (20) bewegt, umfasst.

**10.** Verfahren nach Anspruch 9, wobei das Kompensieren einer Antriebsoperation des Aktors (100) das Messen einer Empfindlichkeit eines Aktors (100) umfasst, das umfasst:

- Positionieren der Linse (101) der optischen Aufnehmervorrichtung (20) an einer mittigen radialen Position eines Sägezahnbereichs des ersten Musters und Anlegen einer vorgegebenen Spannung an den Aktor (100), um die Linse (101) um eine vorgegebene Strecke zu bewegen;
- Berechnen einer tatsächlichen Bewegungsstrecke der Linse (101) anhand eines Tastverhältnisses eines aus dem Sägezahnbereich detektierten Signals; und
- Berechnen einer tatsächlichen Spannung, die erforderlich ist, um die Linse (101) um die vorgegebene Strecke zu bewegen.

**11.** Verfahren nach Anspruch 1, wobei das Anwenden der mehreren vorgegebenen Positionsfehler-Kompensationswerte, um einen Positionsfehler zu kompensieren, das Einstellen jeder Schrittbewegung des Schrittmotors (21) durch einen Wert, der im Wesentlichen gleich seinem entsprechenden Positionsfehler-Kompensationswert ist, umfasst.

**12.** Verfahren nach Anspruch 1, wobei das Zugreifen auf mehrere vorgegebene Positionsfehler-Kompensationswerte ferner das vorherige Speichern mehrerer Positionsfehler-Kompensationswerte in einem Speicherabschnitt (71) einer Vorrichtung für optische Platten während der Herstellung der Vorrichtung für optische Platten umfasst.

**13.** Verfahren nach Anspruch 12, wobei das vorherige Speichern mehrerer Positionsfehler-Kompensationswerte in einem Speicherabschnitt (71) einer Vorrichtung für optische Platten während der Herstellung der Vorrichtung für optische Platten umfasst:

- Positionieren einer Datenoberfläche des Aufzeichnungsmediums (10), die einer optischen Aufnehmervorrichtung (20) zugewandt ist;
- Verschieben der optischen Aufnehmervorrichtung (20) in eine anfängliche vorgegebene Position und Lesen anfänglicher Adressinformationen von der Datenoberfläche, die der anfänglichen Position entsprechen;
- Bewegen der optischen Aufnehmervorrichtung (20) um eine vorgegebene Strecke von der anfänglichen Position in eine neue Position anhand einer vorgegebenen Ansteuerungsspannung;
- Lesen von Adressinformationen aus der Datenoberfläche, die der neuen Position entsprechen, und Bestimmen einer tatsächlichen Bewegungsstrecke anhand der Adressinformationen; und
- Vergleichen der vorgegebenen Bewegungsstrecke mit der tatsächlichen Bewegungsstrecke und Bestimmen eines entsprechenden Positionsfehlerwertes.

**14.** Verfahren nach Anspruch 13, wobei das Lesen von Adressinformationen aus der Datenoberfläche, die der neuen Position entsprechen, und das Bestimmen einer tatsächlichen Bewegungsstrecke anhand der Adressinformationen umfasst:

- mehrmaliges Lesen von Adressinformationen, die der neuen Position entsprechen, von der Datenoberfläche;
- Bestimmen einer tatsächlichen Bewegungsstrecke jedesmal, wenn die Adressinformationen gelesen werden; und
- Mitteln der bestimmten tatsächlichen Bewegungsstrecken, um eine gemittelte tatsächliche Bewegungsstrecke zu bestimmen.

**15.** Verfahren nach Anspruch 13, das ferner das Wiederholen der Bewegungs-, Lese- und Vergleichsschritte in einer vorgegebenen Anzahl, das Tabellieren der resultierenden Positionsfehlerwerte und das Speichern der resultierenden Positionsfehlerwerte als eine Mehrzahl von Positionsfehler-Kompensationswerten in einem Speicherabschnitt (71) der Vorrichtung für optische Platten umfasst.

**16.** Verfahren nach Anspruch 1, wobei das aufzeichnungsfähige Medium (10) eine LightScribe-Platte ist.

**Revendications**

**1.** Procédé pour imprimer une étiquette sur un support enregistrable (10) qui inclut une surface à données configurée pour recevoir et stocker des données sur un premier côté du support, et une surface à étiquette configurée pour recevoir une étiquette imprimée sur elle-même sur un second côté opposé au premier côté, le procédé comprenant les opérations consistant à :

- lire un premier motif depuis le support enregistrable (10) pour déterminer si le support enregistrable (10) inclut à la fois une surface à données sur un premier côté de lui-même et une surface à étiquette sur un second côté opposé au premier côté de lui-même, de sorte que le premier motif est lu par un détecteur (12) à branches et comprend une pluralité de branches prévues à proximité d'une circonférence intérieure d'un support enregistrable (10) ;
- déterminer si une surface du support enregistrable (10) en face d'un dispositif de lecture optique (20) correspond à la surface à données ou à la surface à étiquette du support enregistrable (10) en se basant sur une réflexion de lumière optique depuis la surface du support enregistrable (10) en face du dispositif de lecture optique (20) ;
- synchroniser le fonctionnement du dispositif de lecture optique (20) avec une position de référence délimitée par le premier motif si l'on détermine que la surface du support enregistrable (10) en face du dispositif de lecture optique (20) est la surface à étiquette ;
- accéder une pluralité de valeurs prédéterminées de compensation d'erreur de position correspondant à une pluralité de mouvements par pas prédéterminés dans une rotation d'un moteur pas à pas (21) qui déplace le dispositif de lecture optique (20) ; et
- appliquer la pluralité de valeurs prédéterminées de compensation d'erreur de position pour compenser une erreur de position lorsque le moteur pas à pas (21) tourne et déplace le dispositif de lecture optique (20) tout en exécutant une opération d'impression d'étiquettes pour imprimer une image sur la surface à étiquette du support enregistrable (10).

2. Procédé selon la revendication 1, dans lequel la détermination quant à savoir si une surface du support enregistrable (10) en face d'un dispositif de lecture optique (20) correspond à la surface à données ou à la surface à étiquette comprend les opérations consistant à :

- déterminer que la surface en face du dispositif de lecture optique (20) est la surface à données si la lumière optique est réfléchie depuis la surface en face du dispositif de lecture optique (20) ; et
- déterminer que la surface en face du dispositif de lecture optique (20) est une surface à étiquette si la lumière n'est pas réfléchie depuis la surface en face du dispositif de lecture optique (20).

3. Procédé selon la revendication 1, dans lequel l'opération de synchronisation du dispositif de lecture optique (20) avec une position de référence délimitée par le premier motif comprend une opération de synchronisation du dispositif de lecture optique (20) avec une branche (branche 0) de la pluralité de branches qui correspond à une position zéro sur la circonférence intérieure du support enregistrable.

4. Procédé selon la revendication 1, dans lequel l'opération de synchronisation du dispositif de lecture optique (20) avec une position de référence délimitée par le premier motif comprend de commander une vitesse de rotation du support enregistrable (10).

5. Procédé selon la revendication 1, dans lequel la position de référence délimitée par le premier motif fournit aussi des informations de localisation en relation avec au moins une marque d'indexation parmi une pluralité, une zone en dents de scie, et une zone d'identification de support.

6. Procédé selon la revendication 1, dans lequel les pas prédéterminés dans une rotation du moteur pas à pas (21) comprennent 20 mouvements par pas du dispositif de lecture optique (20) dans une rotation de 360° du moteur pas à pas (21) de sorte que chaque mouvement de pas correspond à une rotation de 18° du moteur pas à pas (21).

7. Procédé selon la revendication 6, dans lequel chacun des mouvements de la pluralité de mouvements par pas prédéterminés a une distance prescrite d'approximativement 150 $\mu$m.

8. Procédé selon la revendication 7, dans lequel la distance prescrite d'approximativement 150 $\mu$m est basée sur un pas de 3 $\mu$m d'une portion filetée du moteur pas à pas (21).

9. Procédé selon la revendication 1, comprenant en outre une compensation pour une opération de pilotage d'un actionneur (100) qui déplace une lentille (101) du dispositif de lecture optique (20).

10. Procédé selon la revendication 9, dans lequel la compensation pour une opération de pilotage de l'actionneur (100) comprend de mesurer une sensibilité de l'actionneur (100), comprenant les opérations consistant à :

- positionner la lentille (101) du dispositif de lecture optique (20) à une position centrale radiale d'une zone en dents de scie du premier motif et à appliquer un voltage prédéterminé à l'actionneur (100) pour déplacer la lentille (101) d'une distance prédéterminée ;
- calculer une distance de déplacement réelle

EP 1 720 165 B1

de la lentille (101) en se basant sur un rapport de service d'un signal détecté depuis la zone en dents de scie ; et

- calculer un voltage réel exigé pour déplacer la lentille (101) de la distance prédéterminée.

11. Procédé selon la revendication 1, dans lequel l'application de la pluralité de valeurs prédéterminées de compensation d'erreur de position pour compenser une erreur de position comprend d'ajuster chaque mouvement par pas du moteur pas à pas (21) d'une valeur sensiblement égale à sa valeur de compensation d'erreur de position correspondante.

12. Procédé selon la revendication 1, dans lequel opérations d'accès à une pluralité de valeurs de compensation d'erreur de position prédéterminées comprend en outre un stockage préalable d'une pluralité de valeurs de compensation d'erreur de position dans une partie de mémoire (71) d'un dispositif à disque optique pendant la fabrication du dispositif à disque optique.

13. Procédé selon la revendication 12, dans lequel le stockage préalable d'une pluralité de valeurs de compensation d'erreur de position dans une partie de mémoire (71) d'un dispositif à disque optique pendant la fabrication du dispositif à disque optique comprend les opérations consistant à :

- positionner une surface à données du support d'enregistrement (100) en face d'un dispositif de lecture optique (20) ;
- décaler le dispositif de lecture optique (20) à une position initiale prédéterminée et lire des informations d'adresse initiale à partir de la surface à données en correspondance de la position initiale ;
- déplacer le dispositif de lecture optique (20) d'une distance prédéterminée depuis la position initiale jusqu'à une nouvelle position en se basant sur un voltage de pilotage prédéterminé ;
- lire des informations d'adresse depuis la surface à données en correspondance de la nouvelle position et déterminer une distance réelle de déplacement en se basant sur les informations d'adresse ; et
- comparer la distance prédéterminée de déplacement à la distance réelle de déplacement, et déterminer une valeur d'erreur de position correspondante.

14. Procédé selon la revendication 13, dans lequel la lecture des informations d'adresse depuis la surface à données en correspondance de la nouvelle position et la détermination d'une distance réelle de déplacement en se basant sur les informations d'adresse comprend les opérations consistant à :

- lire des informations d'adresse depuis la surface à données en correspondance de la nouvelle position une pluralité de fois ;
- déterminer une distance réelle de déplacement chaque fois que les informations d'adresse sont lues ; et
- faire une moyenne des distances réelles déterminées de déplacement pour déterminer une moyenne de la distance réelle de déplacement.

15. Procédé selon la revendication 13, comprenant en outre de répéter les étapes de déplacement, de lecture et de comparaison un nombre de fois prédéterminé, de faire un tableau des valeurs d'erreur de position résultantes, et de stocker les valeurs d'erreur de position résultantes sous forme d'une pluralité de valeurs de compensation d'erreur de position dans une partie de mémoire (71) du dispositif à disque optique.

16. Procédé selon la revendication 1, dans lequel le support enregistrable (10) et un disque de type "LightScribe".

# FIG. 1

- Ideal sled movement (movement by predetermined distance)

SP1     SP2     SP3     SP4     SP5

← 150um →

- Actual sled movement

SP1     SP2     SP3     SP4     SP5

1-step movement     Position Error

# FIG. 2

Outer area

Inner area

sled movement point

sled movement point

sled movement point

# FIG. 3

From Microprocessor

# FIG. 4

Label Zone

Control Feature Zone

Clamping/Logo Zone

Center Hole

# FIG. 5

End of Media ID Field 3

Beginning of Media ID Field 1

Angle-0

Index Mark

Mirror Area

Control Feature Outer Ring

Speed Control Features

Spoke 399

Spoke 0

# FIG. 6

Saw-teeth

Media ID
Field 3

61.2°

45°

Index Mark

18°

Media ID
Field 2

118.8°

55.8°

Media ID
Field 1

61.2°

Saw-teeth

# FIG. 7

```
                    ┌─────────────────────┐
                    │        Start        │
                    └─────────────────────┘
                              │
                              ▼
              ┌──────────────────────────────────┐  S10
              ⟨ Label printing capable disc inserted ? ⟩──── No
              └──────────────────────────────────┘
                              │ Yes
                              ▼
              ┌──────────────────────────────────┐  S20
              ⟨    Seated surface = label surface ?   ⟩──── No
              └──────────────────────────────────┘
                              │ Yes
                              ▼
         ┌────────────────────────────────────────┐  S21
         │ Detect index mark, synchronize spoke "0",│
         │        & detect media ID information     │
         └────────────────────────────────────────┘
                              │
                              ▼
         ┌────────────────────────────────────────┐  S22
         │    Perform recording operation for a label│
         │ surface, & compensate for position error │
         │         generated by sled motor based on │
         │ position error for each step of sled motor│
         └────────────────────────────────────────┘
                              │
                              ▼
              ┌──────────────────────────────────┐  S30
              ⟨        Recording completed ?         ⟩──── No
              └──────────────────────────────────┘
                              │ Yes
                              ▼
                    ┌─────────────────────┐
                    │         End         │
                    └─────────────────────┘
```

# FIG. 8

# FIG. 9

```
                    ┌─────────────────────────┐
                    │          Start           │
                    └─────────────────────────┘
                                 │
                    ┌─────────────────────────┐  S40
             ◄──────┤ Label printing capable   │
                    │     disc inserted ?      ├── No
                    └─────────────────────────┘
                            │ Yes
                    ┌─────────────────────────┐  S50
                    │ Seated surface =         │
                    │     data surface ?       ├── No
                    └─────────────────────────┘
                            │ Yes
                    ┌─────────────────────────┐  S51
                    │ Move optical pickup unit │
                    │  to initial position     │
                    │ & Read address information│
                    └─────────────────────────┘
                                 │
                    ┌─────────────────────────┐  S52
                    │ Rotate sled motor by one │
                    │ step in tracking servo   │
                    │ off state so as to move  │
                    │ optical pickup unit by   │
                    │ predetermined distance   │
                    └─────────────────────────┘
                                 │
                    ┌─────────────────────────┐  S53
                    │ Switch on tracking servo,│
                    │ read address information │
                    │ at moved position,       │
                    │ & calculate movement     │
                    │ distance                 │
                    └─────────────────────────┘
                                 │
                    ┌─────────────────────────┐  S54
                    │ Repeat operations of     │
                    │ step S53 a predetermined │
                    │ number of times          │
                    └─────────────────────────┘
                                 │
                    ┌─────────────────────────┐  S55
                    │ Detect average value of  │
                    │ detected movement        │
                    │ distance as actual sled  │
                    │ movement distance for    │
                    │ corresponding step       │
                    └─────────────────────────┘
                                 │
                    ┌─────────────────────────┐  S60
                    │ One-rotation of step     │
                    │ motor completed ?        ├── No
                    └─────────────────────────┘
                            │ Yes
                    ┌─────────────────────────┐  S61
                    │ Calculate/store position │
                    │ error of each step       │
                    └─────────────────────────┘
                                 │
                    ┌─────────────────────────┐
                    │          End             │
                    └─────────────────────────┘
```

# FIG. 10

Phase A

Phase B

18(degrees)

Pitch 3.0mm

1Step Movement
=18/360*3.0
=150um

N | S | N | S

# FIG. 11

# FIG. 12

# FIG. 13

Outer
area

Inner
area

sled movement
point

sled movement
point

sled movement
point

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1515318 A1
- US 20050058044 A1
- EP 1439537 A2